# EUROPÄISCHE PATENTSCHRIFT

(11) **EP 0 683 347 B1**
(45) Veröffentlichungstag und Bekanntmachung des Hinweises auf die Patenterteilung: **24.05.2000**
(21) Anmeldenummer: 95103294.5
(22) Anmeldetag: 08.03.1995
(51) Int. Cl.: F16L 55/16, F16L 55/18, F16L 55/26

(54) **Vorrichtung zum Reparieren unterirdisch verlegter Rohrleitungen**
Device for repairing underground pipelines
Dispositif pour la réparation de canalisations enterrées

(30) Priorität: 17.05.1994 DE 9407899 U
(43) Veröffentlichungstag der Anmeldung: 22.11.1995
(73) Patentinhaber: Janssen, Franz, 47546 Kalkar-Wissel (DE)
(72) Erfinder: Janssen, Franz, 47546 Kalkar-Wissel (DE)
(74) Vertreter: Gille Hrabal Struck Neidlein Prop Roos

(56) Entgegenhaltungen:
- EP-A- 0 253 588
- EP-A- 0 335 223
- EP-A- 0 465 892
- DE-A- 4 213 898
- US-A- 5 040 922

## Beschreibung

Die Erfindung betrifft eine Vorrichtung zum Reparieren unterirdisch verlegter Rohrleitungen, welche die Merkmale des Oberbegriffes des Patentanspruches 1 aufweist. Eine Vorrichtung mit diesen Merkmalen ist aus der DE-A-42 13 898 bekannt.

Vorrichtungen zum Reparieren oder Sanieren unterirdisch verlegter Rohrleitungen sind bekannt und weisen beispielsweise einen sogenannten Packer auf, der mehr oder weniger zylindrisch ausgebildet ist und sich im aufgeblasenen Zustand an die Innenwand einer Rohrleitung anschmiegt. Im mittleren Bereich dieses Packers befindet sich eine Düse, durch die fließfähiges Reparaturmaterial wie beispielsweise Zwei-Komponenten-Kunstharz ausgedrückt und in eine zu sanierende oder reparierende Stelle der Rohrleitung gepreßt werden kann. Dieses Zwei-Komponenten-Kunstharz härtet sehr schnell aus, so daß die Reparaturarbeiten schnell auszuführen sind. Da der Packer im Betrieb den gesamten Querschnitt der Rohrleitung ausfüllt, kann während der Reparatur- und Sanierungsarbeiten die Rohrleitung nicht anderweitig benutzt werden, das heißt es kann kein Abwasser oder dergleichen hindurchfließen.

Es ist auch möglich, mittels eines speziell ausgebildeten Packers sogenannte Hausanschlußleitungen, die in eine den Hauptkanal bildende größere Rohrleitung münden, zu reparieren oder zu sanieren. Da sich bei Hausanschlußleitungen Schäden vornehmlich dort einstellen, wo die Hausanschlußleitungen in die als Hauptkanal dienende größere Rohrleitung einmünden, ist die Reparatur mit bekannten Packern nicht einfach durchzuführen, sondern problematisch.

Bei der aus der DE-A-42 13 898 bekannten Vorrichtung zum Reparieren unterirdisch verlegter Rohrleitungen gemäß dem Oberbegriff des Patentanspruches 1 ist der im aufgeblasenen Zustand die Rohrleitung ausfüllende flexible Balg mit einem ihn in axialer Richtung durchsetzenden zentralen offenen flexiblen Rohr versehen, durch welches Abwasser hindurchfließen kann, wenn sich der Balg in der aufgeblähten Arbeitsposition befindet. Das Rohr kann dabei auch exzentrisch im zylindrischen Balg angeordnet sein.

Da der zylindrische Balg im aufgeblähten Zustand den gesamten Querschnitt der Rohrleitung ausfüllt, ist ein ungehinderter Durchstrom des in der Rohrleitung fließenden Wassers trotz des zum Durchstrom des Abwassers im Balg vorgesehenen Rohes zumindest behindert, und zwar auch dann, wenn der Balg nicht aufgeblasen ist, um ihn in die Betriebsposition verbringen oder aus dieser wieder herausführen zu können.

Zum Abdichten einer in eine Kanalrohrleitung einmündenden Zulaufleitung ist es bekannt (EP-A-0 465 892), einen aufblasbaren Dehnkörper auf einem topfförmigen heb- und senkbaren Druckbehälter anzuordnen, der sich seinerseits auf zwei Schlitten abstützt, die sich entlang der Sohle der zu reparierenden Rohrleitung bewegen lassen. Diese Schlitten beeinträchtigen einen freien Durchfluß von Abwasser durch die Rohrleitung.

Zum Auskleiden einer unterirdisch verlegten Rohrleitung ist es weiterhin bekannt (EP-A-0 253 588), einen in eine Anschlußleitung einzufahrenden aufblasbaren Balg auf einem heb- und senkbar angeordneten Tisch vorzusehen. Auch in diesem Falle bildet der als Träger für den heb- und senkbaren Tisch vorgesehene Schlitten ein dem freien Durchfluß von Abwasser durch die Rohrleitung entgegenwirkendes Hindernis.

Der Erfindung liegt die Aufgabe zugrunde, eine Vorrichtung zum Reparieren unterirdisch verlegter Rohrleitungen zu schaffen, die insbesondere zum Reparieren im Mündungsbereich von Hausanschlußleitungen geeignet ist und auch bei normalem Betrieb des Hauptkanals eingesetzt werden kann.

Diese Aufgabe wird mit einer Vorrichtung der eingangs genannten Gattung gelöst, welche die Merkmale des Patentanspruches 1 aufweist. Vorteilhafte Ausgestaltungen der Erfindung sind Gegenstand der von Anspruch 1 abhängigen Unteransprüche.

Da der erfindungsgemäß in einem offenen Rahmen oder Gestell untergebrachte aufblasbare Balg mittels einer heb- und senkbaren Platte an die eigentliche Reparaturstelle herangefahren werden kann, braucht er den Querschnitt der Rohrleitung nicht auszufüllen und damit während des Betriebes die den Hauptkanal bildende Rohrleitung nicht zu blockieren. Der zylindrisch Ansatz ermöglicht es, im eigentlichen Problembereich, das heißt an der Mündungsstelle der Hausanschlußleitung in den Hauptkanal, dort entstandene Risse oder Löcher in den Rohrleitungen gezielt schnell und sachgerecht zu reparieren.

Die im zylindrischen Ansatz untergebrachte Fernsehkamera ermöglicht es, die Vorrichtung an eine Reparaturstelle heranzufahren und dort genau zu positionieren, bevor der Balg mit dem daran angebrachten zylindrischen Ansatz aufgeblasen wird und der zylindische Ansatz sich dadurch in die richtige Position in der betreffenden Hausanschlußleitung legt.

Die Hubgetriebe können beispielsweise mittels Luftmotoren angetrieben sein, jedoch ist es auch möglich, zum Heben und Senken der den Balg tragenden Platte hydraulische oder pneumatische Stellzylinder zu verwenden.

Die in Längsrichtung der Vorrichtung verlaufenden Kufen ermöglichen eine leichte Bewegung der Vorrichtung in einer Rohrleitung. In der Betriebsposition können diese Kufen von dem Boden der Rohrleitung abgehoben werden, da sie zweckmäßig innerhalb des offenen Rahmens der Vorrichtung entsprechend beweglich gelagert sind. Der offene Rahmen weist ringförmige Abstützelemente auf, deren Außenumfang ebenfalls kufenförmig ausgebildet ist, um die Vorrichtung innerhalb der Rohrleitung in die gewünschte Reparaturposition verdrehen zu können. Auch können eine Drehbewegung der Vorrichtung um ihre Längsachse begünstigende drehbare Rollen vorgesehen sein.

Die Zufuhr der fließfähigen Reparaturmaterialien erfolgt wie bei bekannten Packern. Auch erfolgt das Aufpumpen des Balges und des zylindrischen Ansatzes in bekannter Weise.

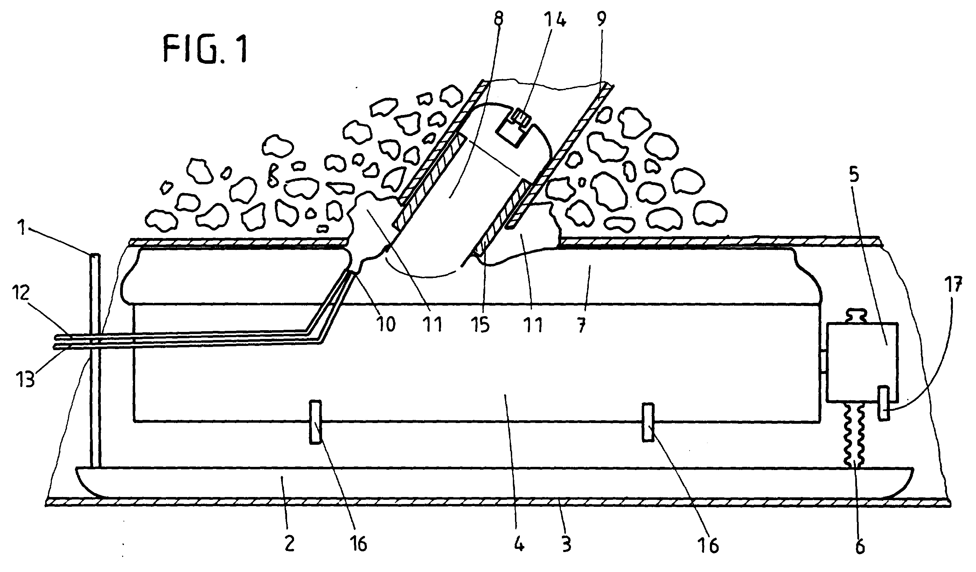

In der Zeichnung ist ein Ausführungsbeispiel einer erfindungsgemäßen Vorrichtung zum Reparieren einer unterirdisch verlegten Rohrleitung im Bereich einer in dieselbe mündenden Hausanschlußleitung schematisch in der Betriebsposition dargestellt.

Die Vorrichtung hat einen in der Zeichnung nur angedeuteten offenen Rahmen 1 mit daran angeordneten Kufen 2, mit deren Hilfe die Vorrichtung entlang einer unterirdisch verlegten Rohrleitung 3 bewegt, beispielsweise gezogen, werden kann.

Innerhalb des Rahmens 1 ist eine tischförmige Platte 4 heb- und senkbar angeordnet. Diese Platte 4 wird mit Hilfe von zwei Hubgetrieben 5, von denen in der Zeichnung nur eines dargestellt ist, und mit Hilfe senkrecht verlaufender Spindeln 6 in die jeweils gewünschte Position bewegt.

Auf der tischförmigen Platte 4 ist ein aufblasbarer Balg 7 befestigt, auf dem im mittleren Bereich ein zylindrischer Ansatz 8 angebracht ist, welcher in eine Hausanschlußleitung 9 paßt.

An der Übergangsstelle zwischen dem mehr oder weniger flachen Balg 7 und dem zylindischen Ansatz 8 ist eine Düse 10 im Balg 7 angeordnet, durch welche Reparaturmaterial wie beispielsweise Zwei-Komponenten-Kunstharz unter Druck austreten kann, um im Übergangsbereich 11 zwischen der Rohrleitung 3 und der Hausanschlußleitung 9 befindliche Schäden und Löcher zu reparieren beziehungsweise auszufüllen. Das Kunstharz wird durch zwei getrennte Rohrleitungen 12 und 13 zugeführt, damit sich seine beiden Komponenten erst unmittelbar vor dem Eintritt in die Düse 10 vermischen, wodurch sofort eine Reaktion einsetzt, die zu einem schnellen Aushärten des Zwei-Komponenten-Kunstharzes führt.

Am äußeren Ende des zylindrischen Ansatzes 8 ist in diesem eine Fernsehkamera 14 untergebracht, mit deren Hilfe die Vorrichtung schnell und einfach im Bereich einer in die Rohrleitung 3 mündenden Hausanschlußleitung 9 positioniert werden kann, bevor der Balg 7 und der zylindrische Ansatz 8 aufgeblasen werden, um die in der Zeichnung dargestelle Position einzunehmen.

Um ein Verkleben des zylindischen Ansatzes 8 mit der Hausanschlußleitung 9 durch das Reparaturmaterial zu verhindern, kann vorteilhafterweise eine Manschette 15 um den zylindrischen Ansatz 8 angeordnet sein, wobei die Manschette 15 aus einem Material besteht, an dem das Reparaturmaterial nicht haftet.

Soll die Vorrichtung um ihre vertikale Achse gedreht werden, beispielsweise im Weichenbereich mehrerer aufeinandertreffender Rohrleitungen 3, können an der tischförmigen Platte 4 Gleitvorrichtungen 16 wie Räder oder Kufen angeordnet sein. Auch die Hubgetriebe 5 können mit Gleitvorrichtungen 17 versehen sein.

## Patentansprüche

1. Vorrichtung zum Reparieren unterirdisch verlegter Rohrleitungen (3) im Bereich von in die Rohrleitung mündenden Hausanschlußrohren (9), mit einem in der Rohrleitung aufblasbaren flexiblen Balg (7), der einen im mittleren Bereich des Balges (7) angeordneten zylindrischen Ansatz (8) aufweist, welcher in ein in die Rohrleitung (3) mündendes Hausanschlußrohr 9) paßt, und der im aufgeblasenen Zustand an die Innenwand der Rohrleitung (3) anschmiegbar ist, mit einer am äußeren Ende des zylindrischen Ansatzes (8) des Balges (7) befindlichen Fernsehkamera (14) und mit Rohrleitungen (12, 13) zum Zuführen von unter Druck stehenden fließfähigen Reparaturmaterialien wie beispielsweise Zwei-Komponenten-Kunstharzen zu einer Düse (10),
**dadurch gekennzeichnet,**
daß der flach ausgebildete Balg (7) mit dem Ansatz (8) auf einer in einem ringförmige Abstützelemente aufweisenden offenen Rahmen (1) mittels am offenen Rahmen (1) abgestützten Hubgetrieben (5) heb- und senkbar gelagerten Plane (4) angeordnet und daß der die ringförmigen Abstützelemente aufweisende offene Rahmen (1) mit in Längsrichtung desselben verlaufenden Kufen (2) versehen ist, die innerhalb des offenen Rahmens heb- und senkbar gelagen sind.

2. Vorrichtung nach Anspruch 1, dadurch gekennzeichnet, daß die Plane (4) mit mindestens einer Gleitvorrichtung (16) versehen ist.

3. Vorrichtung nach Anspruch 1, dadurch gekennzeichnet, daß mindestens ein Hubgetriebe (5) mit einer Gleitvorrichtung (17) versehen ist.

4. Vorrichtung nach Anspruch 2 oder 3, dadurch gekennzeichnet, daß die Gleitvorrichtungen (16, 17) Kufen sind.

5. Vorrichtung nach Anspruch 2 oder 3, dadurch gekennzeichnet, daß die Gleitvorrichtungen (16, 17) Räder sind.

## Claims

1. Device for repairing underground pipelines (3) in the region of house service connections (9) opening into said pipeline, comprising a flexible bellow (7) inflatable within said pipeline and including a cylindrical projection (8) located in the centre area of said bellow (7) fitting into a house service connection (9) opening into said pipeline (3) and which in the inflated condition rests against the inner wall of said pipeline, further comprising a television camera (14) provided at the outer end of said cylindrical projection (8) of said bellow (7), further comprising tubes (12, 13) for transporting pressurized fluid repair materials, such as for instance two-component synthetic resins, to a an extruder nozzle (10),
**characterized in that**
the flat shaped bellow (7) is arranged intermediate said projection (8) on a plate (4) provided in an open frame (1) comprising circular support elements and movable between an upper and a lower position by means of hoisting gears (5), and in that said open frame (1) comprising said circular support elements is provided with longitudinally extending skids (2) movably arranged in said frame between an upper and a lower position.

2. Device as defined by claim 1,
**characterized in that,**
said plate (4) is provided with at least one slide bar (16).

3. Device as defined by claim 1,
**characterized in that**
at least one hoisting gear is provided (5) is provided with a slide bar (17).

4. Device as defined by either of claims 2 or 3,
**characterized in that**,
the slide bars (16, 17) are runner skids.

5. Device as defined by either of claims 2 or 3,
characterized in that the slide bars (16, 17) are wheels.

## Revendications

1. Dispositif pour la réparation de canalisations enterrées (3) dans la région de lignes de branchement d'immeubles (9) débouchant dans cette canalisation et comprenant un soufflet flexible (7) gonflable à l'intérieur de cette ligne, et comportant un épaulement cylindrique (8) disposé dans une région centrale du soufflet (7) et pouvant être ajusté à l'intérieur d'une ligne de branchement d'immeuble (9) débouchant dans ladite canalisation (3) et qui, à l'état gonflé, épouse la paroi intérieure de la canalisation (3), comportant par ailleurs une caméra de télévision (14) disposée à l'extrémité extérieure de l'épaulement cylindrique (8) du soufflet (7), et comprenant également des tubes (12, 13) pour le transport de matériaux de réparation fluides pressurisés, tels que des résines synthétiques à deux composantes, en direction d'une une filière d'extrusion (10),
**caractérisé en ce que,**
le soufflet plat (7) repose par l'intermédiaire de l'épaulement (8) sur une plaque (4) disposée à l' intérieur d'un cadre ouvert (8) comprenant des élements de support circulaires, cette plaque (4) étant déplaçable à l'aide d'un engrenage de levage entre une position haute et une position basse, et en ce que le cadre ouvert (1), comportant lesdits éléments de support circularies, est équipé de patins longitudinaux (2) déplaçable à l'intérieur dudit cadre entre une position haute et une position basse.

2. Dispositif suivant la revendication 1,
**caractérisé en ce que**
la plaque (4) est pourvue d'au moins un dispositif coulissant (16).

3. Dispositif suivant la revendication 1,
**caractérisé en ce que**
au moins l'un des engrenages de levage (5) est équipé d'un dispositif coulissant (17).

4. Dispositif suivant l'une des revendications 2 ou 3,
**caractérisé en ce que**
les dispositifs coulissants (16, 17) sont des patins.

5. Dispositif suivant l'une des revendications 2 ou 3,
charactérisé on ce que les dispositifs coulissants (16, 17) sont des roues.
